# EUROPÄISCHE PATENTSCHRIFT

(11) **EP 0 705 491 B1**
(45) Veröffentlichungstag und Bekanntmachung des Hinweises auf die Patenterteilung: **20.08.1997**
(21) Anmeldenummer: 94918281.0
(22) Anmeldetag: 18.06.1994
(51) Int. Cl.: H01R 43/28, H02G 1/12

(54) **KONFEKTIONIERTES KABEL, INSBESONDERE FÜR DEN SCHALTSCHRANK- UND STEUERUNGSBAU, VERFAHREN ZU SEINER HERSTELLUNG UND BEARBEITUNGSSVORRICHTUNG HIERFÜR**
READY-FOR-USE CABLE, IN PARTICULAR FOR SWITCH CUPBOARDS OR CONTROLS, PROCESS AND DEVICE FOR PRODUCING THE SAME
CABLE FACONNE, NOTAMMENT POUR LA CONSTRUCTION D'ARMOIRES DE DISTRIBUTION ET DE COMMANDE, SON PROCEDE DE FABRICATION ET DISPOSITIF DE FABRICATION DUDIT CABLE

(30) Priorität: 24.06.1993 DE 4321007
(43) Veröffentlichungstag der Anmeldung: 10.04.1996
(73) Patentinhaber: Klöckner-Moeller GmbH, 53115 Bonn (DE)
(72) Erfinder: SEIDLER, Wolfgang, D-53340 Meckenheim (DE); MÜLLER, Hans, Willi, D-53359 Rheinbach (DE); DARGEL, Gerhard, D-99089 Erfurt (DE)
(86) Internationale Anmeldenummer: DE9400694
(87) Internationale Veröffentlichungsnummer: WO9500988

(56) Entgegenhaltungen:
- EP-A- 0 143 936
- US-A- 2 920 513

## Beschreibung

Die Erfindung betrifft ein konfektioniertes Kabel, insbesondere für den Schaltschrank- und Steuerungsbau, ein Verfahren zu seiner Herstellung und eine Bearbeitungssvorrichtung hierfür nach dem Oberbegriff der Ansprüche 1 oder 9.

Im Steuerungsbau bzw. in Schaltanlagen aber auch in anderen Bereichen, wie in der Automobilindustrie oder in der Leuchtentechnik, ist zur Verdrahtung von Geräten oder Komponenten die Verwendung von biegsamen Kabeln oder Leitungen, die mit einer aus einem Thermoplast bestehenden Isolation ummantelt sind, weitgehend üblich.

Bei kleineren Stückzahlen oder Einzelgeräten ist es bekannt, die Verdrahtung direkt von einer Kabelrolle vorzunehmen, wobei das Kabel unmittelbar vor der Verdrahtung bearbeitet wird. In diesem Fall wird das Kabel, das beispielsweise zwei Klemmen von Schalt-, Befehlsgeräten oder dergleichen elektrisch verbinden soll, auf die passende Länge abgeschnitten. Die Leitungenden werden anschließend mit einer Abisolierzange oder einer anderen Abisoliervorrichtung abgemantelt und mit Adernendhülsen versehen. Diese Verdrahtungsart hat den Vorteil, daß keine überlangen Kabeln in dem Schaltschrank oder Gerät vorhanden sind, so daß die Verdrahtung sauber und übersichtlich ist, insbesondere, wenn die Kabel zu Kabelbäumen gebündelt sind.

Diese Verdrahtungsart ist jedoch Arbeitsintensiv und daher für höhere Stückzahlen nicht geeignet. Zudem ist es bei der Verwendung von Abisolierzangen schwierig oder umständlich, die vom Leiterquerschnitt abhängige abzuisolierende Länge einzuhalten oder einzustellen, wenn die DIN Norm erfüllt werden soll.

Bekannt sind auch thermische Ablisolierer als Tischgeräte, wie in der DE 35 16 668 gezeigt ist,oder als von der Handhabung konfortablere Geräte, wie in der EP 0 128 314 gezeigt und beschrieben ist. Gegenüber den Abisolierzangen hat das letztgenannte Gerät den Vorteil, daß zur Handhabung des Kabels beide Hände zur Verfügung stehen.

Ferner ist aus der DE-OS 34 36 668 ein Verfahren und eine Vorrichtung zum Entfernen der Primärbeschichtung einer Lichtwellenleiterfaser bekannt geworden.

Bekannt sind auch Verfahren zur Herstellung einer abisolierfreien Verbindung von Steuerleitungen, wie in der DE-OS 33 13 654 gezeigt und beschrieben ist. Hierfür ist ebenfalls ein zangenähnliches Werkzeug erforderlich.

Eine Erleichterung der Verdrahtung bieten konfektionierte Leitungen oder Kabel, die vorzugsweise bei der Verdrahtung in hohen Gerätestückzahlen eingesetzt werden, weil eine erhebliche Einsparung an Montagezeit erzielt werden kann.

Zur Herstellung von konfektionierte Leitungen oder Kabel sind Verfahren und Vorrichtungen bekannt, wie aus der Schrift DE-OS 39 02 697.

Bei dieser Verdrahtungsart bedient man sich aus Kabelbehältern bzw. Magazinen, die jeweils Kabel- oder Leitungsbündel mit konfektionierten Leitungen gleicher Länge aufnehmen. Die Leitungslängen sind daher abgestuft, wodurch die Kabel oft länger als erforderlich sind, was im Vergleich mit der obengenannten Verdrahtungsart mit einer höheren Gesamtkabellänge verbunden ist. In einigen Fällen ist sogar eine nachträgliche Bearbeitung des Kabels erforderlich.

Um eine Zuordnung der Kabeln zu den einzelnen Kabelklemmen zu erleichtern, ist es bekannt, die Leitungen mit einem Kabelkennzeichnungsträger zu versehen, wie in der DE-OS 41 35 997 gezeigt ist.
Sollen derartige Kabel bei der Konfektionierung mit einer derartigen Kennzeichnung versehen sein, dann besteht das Problem der übersichtlichen Unterbringung der konfektionierten Kabel. Die Unterbringung soll derart gestaltet sein, daß nicht lange nach dem richtigen Kabel gesucht werden muß. Wegen der zum Teil sich ergebenden hohen Kabel- und Kennzeichnungsvielfalt, ist es schwierig, dagegen Abhilfe zu schaffen.

Bei der Verwendung von Adernendhülsen sind nicht nur zusätzliche Teile, sondern auch für die Massenfertigung teure und komplizierte Maschinen erforderlich.

Aus der GB 2 0 52 177 A ist ein Verfahren und eine Kabelkette bekannt, die eine Verdrahtung direkt aus der Verdrahtungsliste ermöglicht ohne den Einsatz von Standardlängen.
Die hierfür vorgesehene Bearbeitungsmaschine schneidet Teile der Isolierung entsprechend den erforderlichen Längen. Beim Verdrahten ist ein verbleibendes Isolierungsstück (40) zu schneiden und abzuziehen. Um die erforderliche Abisolierlänge zu erreichen, ist weiterhin ein weiterer Bearbeitungsschritt notwendig, der in der Verwendung einer Abisolierzange liegt. Um beispielsweise eine derartige Leitung an Schaltgeräten, wie Schütze oder Motorschutzschalter, anschließen zu können, wären die Leitungswenden mit Hülsen oder dergleichen noch zusätzlich zu bearbeiten. Ein Schutz gegen das Einklemmen der Isolierung besteht hier nicht.

Eine andere Art der Magazinierung von Einzelleitern ist aus der DE 33 27 583 A bekannt. Bei diesem Verfahren werden Einzelleiter abgelängt, abisoliert und mit Steckern versehen. Diese werden anschließend mittels Kupplungsteilen miteinander lösbar verbunden, so daß sie geordnet magaziniert werden können. Nachteilig ist jedoch der hohe maschinelle Aufwand und die Erfordernis von Steckern. Ungünstig sind auch die Kupplungsstücke auf der Kabelrolle. Eine Verwendung derartiger Leitungen beispielsweise zum Verdrahten von Schaltgeräten ist nicht geeignet.

Eine andere Art der Magazinierung wird in der US 31 55 136 dargestellt. Die vorher aufgetrennten Einzelleiter werden mit paarweise angeordneten und miteinander verbundenen Steckern zusammengefügt. Die miteinander verbundenen Kabel, können dann auf einer Kabelrolle aufgewickelt werden. Diese Einzelleiter bzw. die Stecker sind an den Verbindungsstellen auftrennbar. Zum Verdrahten z.B. von Schaltschänken sind diese Einzelleiter jedoch auch nicht geeignet.

Zur Herstellung von konfektionierten Einzelleitern ist es bekannt, im Bereich zweier Kabelenden eine Zwischenabisolierung vorzunehmen und die verbundenen Kabel dort aufzutrenen, wie z.B. die US 33 64 801 zeigt. Das Problem der geordneten Magazinierung wird hier nicht gelöst.

Ferner ist aus der DE 29 39 360 C eine Vorrichtung von Kabelbäumen bekannt geworden, bei der die Leitungen während des Verlegevorgangs mit einer Kennzeichnung mit Hilfe einer Heißprägeeinrichtung versehen werden, damit vor allem Kabel vorzugsweise weißer Farbe verlegt werden können. Weiterhin sollen damit Kabel unterschiedlicher Kabelstärken direkt von Kabelmagazinen entnehmbar sein. Es entsteht dann ein geschlossener Leitungszug auf einem Kabelbrett. Zur Lösung der nachfolgenden Aufgabe ist die Montagevorrichtung jedoch nicht geeignet.

Aufgabe der Erfindung ist es deshalb, konfektioniertes Kabel, insbesondere für den Schaltschranksteuerungsbau, nach dem Oberbegriff des Anspruches 1 zu schaffen, um kostengünstig eine geeignete, saubere, schnelle und möglichst fehlerfreie Verdrahtung zu ermöglichen, ohne daß z.B. überlange Kabel vorhanden sind oder die aufwendige Aufstellung von Vorratsbehältern erforderlich ist oder ohne das Vorkommnis von Fehlverdrahtung z.B. durch das Einklemmen der Isolierung.

Die Aufgabe der Erfindung wird durch die kennzeichnenden Merkmale der unabhängigen Ansprüche gelöst, während in den Unteransprüchen besonders vorteilhafte Weiterbildungen der Erfindung gekennzeichnet sind.

Durch die Erfindung wird die Lagerhaltung vereinfacht ebenso der Transport und die Verpackung der konfektionierten Kabel, sowie die Handhabung verbessert. Vorratsbehältnisse oder Magazine können entfallen ebenso wie das Einordnen in diesen. Weiterhin entfallen Abfallstücke wie Isolierungsteile oder Kupferlitze, die bei der Verdrahtung meistens auf den Boden fallen.

Weiterhin ist durch die Erfindung das konfektionierte Kabel kostengünstig. Ein Abtrennen der Kabeln läßt sich später ohne Werkzeuge in einfacher Weise erreichen.

Erfindungsgemäß ergibt sich ein günstiges, für die Massenfertigung geeignetes Verfahren zur Herstellung von konfektionierten Kabeln, weil das unbearbeitete, ungetrennte Kabel einem Zwischenabisoliergerät zugeführt wird, die abisolierten Stellen utraschallverdichtet werden und die untraschallverdichteten Stellen in der Mitte mit einer Sollbruchstelle versehen sind, wobei die Kabel in einfacher Weise verbunden bleiben.

Günstig ist es, wenn bei dem Verfahren die Sollbruchstelle durch beidseitiges Einkerben mit einem stumpfen Messerpaar entsteht, wobei die Vertiefungen gegenüberliegend angeordnet sind und insbesondere die Tiefe jeder Einkerbung mindestens 25% beträgt, weil einerseits ein müheloses Abtrennen durch Abknicken möglich ist, ohne daß bei der Bearbeitung ein Abriß entsteht.

Wenn die Sequenz der konfektionierten Kabel mit der Verdrahtungsreihenfolge eines später zu verdrahtendes Gerätes, Schaltschrankes oder dergleichen übereinstimmt, wird immer die gleiche Montagereihenfolge erzwungen, was einer Qualitätsverbesserung der gesamten Anlage gleichkommt und die Fehlersuche vereinfacht. Weitere Vorteile sind Materialersparnis und Montagezeitersparnis.

Eine erhebliche Vereinfachung der Verdrahtung ergibt sich, wenn das Kabel mit einer aufgedruckten Kennzeichnung jeweils am Anfang und am Ende des Kabels versehen ist. Kennzeichnungsträger sowie eine nachträgliche Bearbeitung entfallen, wenn auf dem Kabelmantel oder Kabelisolierung zwischen den abisolierten Stellen eine Kennzeichnung mittels eines Tintenstrahldruckers aufgedruckt wird.

Die Bearbeitungsvorrichtung zur Durchführung des Verfahrens besteht aus einer Zentralsteuerung, aus einer Zwischenabisoliereinheit, einem nachgeordneten Ultraschallverdichter, einem nachgeordnete Kerbgerät, einem Tintenstrahldrucker und eine am Bearbeitungsende angeordnete Vorschubeinheit zum Transport und zur Regelung der Kabellänge; die Zwischenabisoliereinheit, der Ultraschallverdichter, das Kerbgerät, der Tintenstrahldrucker und die Vorschubeinheit werden von der Zentralsteuerung geregelt und gesteuert. Der Tintenstrahldrucker ist zwischen dem Kerbgerät und der Vorschubeinheit angeordnet.

Von besonderem Vorteil ist es, wenn die Vorschubeinheit aus zwei gegeneinander laufenden Bändern besteht, die durch einen Schrittmotor angetrieben werden, wodurch die verdichteten Stellen überbrückt werden und ein genaues Bremsen und Positionieren möglich ist.
Damit das bearbeitete Kabel ohne die Gefahr eines unerwünschten Abtrennens sauber aufgewickelt werden kann, ist hinter der Vorschubeinheit ein Ringwickler zum Aufwickeln auf einer Kabelrolle oder dergleichen angeordnet, wobei der Ringwickler mit einer konstanten, einstellbaren Kraft an dem Kabel zieht.

Vorteilhaft ist es, wenn der von dem Tintenstrahldrucker zu schreibende Text oder die Kennzeichnung, der von der Zentralsteuerung zur Verfügung gestellt wird, als "Abfallprodukt" aus der Auftragsbearbeitung eines CAE-Systems (Projektierungssystem) anfällt.

Wenn das Kabel eine kragen- oder wulstförmige Ausbildung der Isolierung an den Isolierungsenden aufweist, ergibt sich in einfacher Weise eine Tiefenbegrenzung, ein Fingerschutz und ein Schutz gegen versehentliches Einklemmen der Isolierung.

Eine vorteilhafte Anordnung und kostengünstige Bearbeitung ergibt sich, wenn nach dem Ultraschallverdichter oder dem Kerbgerät eine Bearbeitungsstation zur Erzeugung eines ringförmigen Kragens oder Wulst an den Endstellen der Isolierung durch Erhitzen und Stauchen angeordnet ist.

Anhand der Zeichnung, in der ein Ausführungsbeispiel dargestellt ist, sollen die Erfindung, weitere Ausgestaltungen und Verbesserungen der Erfindung und weitere Vorteile näher beschrieben und erläutert werden.

Es zeigt:
- Fig. 1: eine Darstellung einer Bearbeitungsvorrichtung für konfektionierte Kabel,
- Fig. 2a: eine Darstellung der zwischenabisolierten Stelle des Kabels,
- Fig. 2b: eine Darstellung der ultraschallverdichteten Stelle des Kabels,
- Fig. 2c: eine Darstellung der eingekerbten Stelle des Kabels,
- Fig. 2d: eine Darstellung der kragenförmigen Stelle des Kabels,

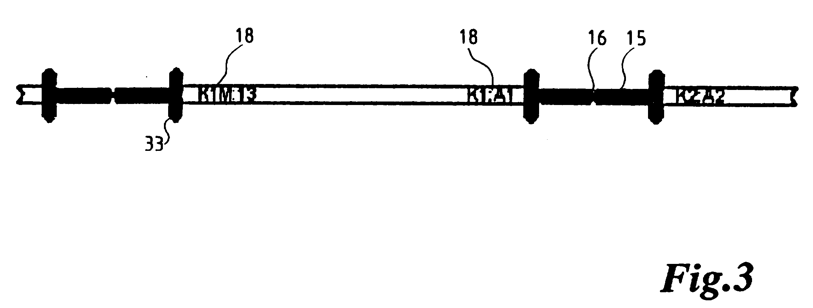

- Fig. 3: eine Darstellung eines mit Kenzeichnungen versehenen Kabels,
- Fig. 4a: eine Darstellung einer Sequenz von miteinander verbunden konfektionierten Kabeln und ein Teilbereich eines zu verdrahtenden Schaltschrankes mit Schalt- oder Steuergeräten,
- Fig. 4b: eine Darstellung, wie die Fig. 4a, mit einem angeschlossenen Kabel,
- Fig. 4c: eine Darstellung, wie die Fig. 4a, mit zwei angeschlossenen Kabeln,
- Fig. 4d: eine Darstellung, wie die Fig. 4a, mit drei angeschlossenen Kabeln,
- Fig. 4e: eine Darstellung, wie die Fig. 4a, mit vier angeschlossenen Kabeln und
- Fig. 5: eine Darstellung einer Bearbeitungsvorrichtung für konfektionierte Kabel mit einer Bearbeitungsstation zur Herstellung von Kragen an den Isolierungsenden.

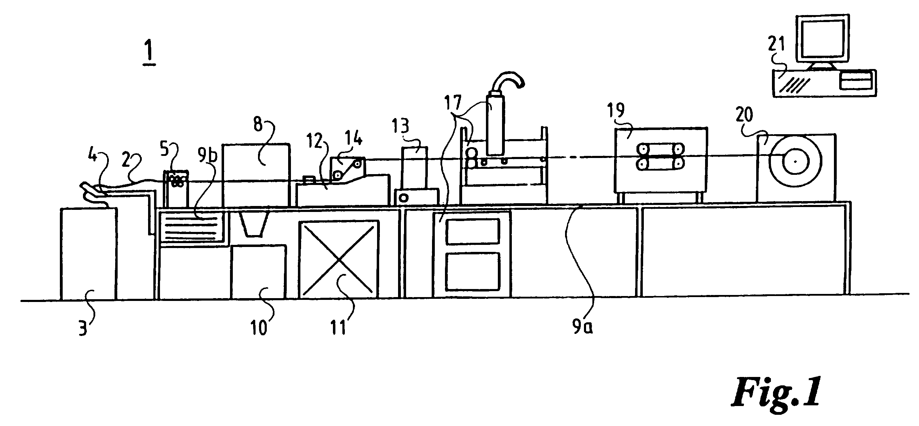

Die Fig. 1 zeigt eine Bearbeitungsvorrichtung 1 zur Bearbeitung eines Litzekabels bzw. zur Herstellung eines konfektionierten Kabels 2.

Das Kabel 2 ist in einem Kabelfaß 3 untergebracht bevor es über einen als Entnahmearm ausgebildeten Kabeleinlauf 4 einem Richtgerät 5 zugeführt wird.

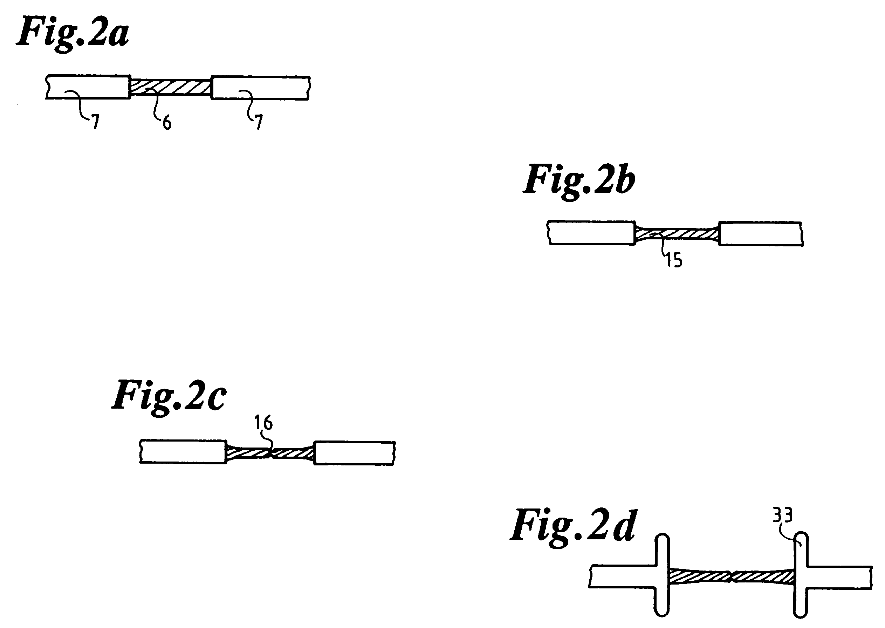

Eine nachgeordneten Zwischenabisoliereinheit 8 entfernt ein Stück der Isolierung ohne das Kabel abzuscheiden, wie in der Fig. 2a gezeigt ist. An dem blanken Leiterstück 6 ist dann sowohl rechts und links davon eine Isolierung 7 angeordnet. Das Abisolieren ist hier durch zwei Ringschnitte entlang des Umfangs und einem Längstschnitt mittels nicht gezeigter Schneidemesser erreicht.

Das Abisolieren kann auch thermisch geschehen.
Die Zwischenabisolierung kann auch als Mittenabisolierung bezeichnet werden.

Im Bereich des Richtgerätes 5 ist unterhalb eines Gerätetisches 9a eine Steuerung 9b für die Zwischenabisoliereinheit 8 angeordnet.

Ein unterhalb der Zwischenabisoliereinheit 8 untergebrachter Abfallbehälter 10 sammelt die abgetrennte Isolierung auf.

Die abisolierten Stelle wird anschließend durch einen Ultraschallverdichter 11, wie in der Fig. 2b gezeigt ist, bearbeitet.

Der Ultraschallverdichter 11 weist in bekannter Weise einen Verdichterkopf 12 auf, in dem ein Amboßsystem, ein bewegliches Schiebersystem und ein Teil des Schwingersystems angeordnet ist. Die Litze wird zunächst durch das Amboß- und Schiebersystem mechanisch vorverdichtet und anschließend durch Ultraschallwellen in bekannter Weise verdichtet bzw. verschweißt.

Nach diesem Bearbeitungsschritt durchläuft das Kabel 2 über Umlenkrollen 14 ein Kerbgerät 13, das mittels eines stumpfes Messerpaares zwei gegenüberliegende kerbenförmige Vertiefungen in der Mitte der ultraschallverdichteten Stelle 15 als - Sollbruchstelle 16 bildet, wie in der Fig. 2c gezeigt ist.

Die Tiefe der Einkerbung beträgt mindestens 25 %, vorzugsweise etwa ein Drittel des Durchmessers der ultraschallverdichteten Stelle. Der Einkerbungswinkel beträgt außerdem etwa 60 Winkelgrade.

Durch das Ultraschallverdichten und das Einkerben können nicht nur die Leitungen später durch abknicken leicht voneinander ohne Werkzeuge getrennt werden sondern es sind auch Adernendhülsen entbehrlich.

Ein Tintenstrahldrucker 17, das hinter dem Kerbgerät 13 angeordnet ist, druckt in bekannter Weise an den Endstellen der Isolierung 7 neben den blanken Stellen des Kabels 2 eine Aufschrift bzw. eine Kennzeichnung 18.
Die Kennzeichnungen 18 an den Endstellen geben die Anschlußziele bzw. die anzuschließenden Klemmen von Schaltgeräten an, so daß das Suchen der Quell- und Zielbezeichnung in den entsprechenden Stromlaufplänen entfällt.

Auf ein Dummy-Kabel wird zur Etikettierung mit dem Tintenstrahldrucker 17 eine Auftragsnummer oder dergleichen aufgedruckt.

Am Ende der Bearbeitungsstationen ist eine Vorschubeinheit 19, bestehend aus einer Transporteinheit, angeordnet, die zwei gegeneinander laufende Bänder aufweist. Der Bandantrieb wird durch einen Schrittmotor angetrieben. Die Vorschubeinheit 19 ist zum Transport und Regelung oder Steuerung der Kabellänge vorgesehen.

Um den Schlupf und die axialen Kräfte möglichst gering zu halten, ist das Arbeiten mit Anfahrrampen günstig. Damit das Kabel während der Bearbeitung an den Sollbruchstellen nicht abreißt, beträgt die Transportgeschwindigkeit höchstens 0,6 m/s.

Die noch miteinander an den Sollbruchstellen 16 verbundenen konfektionierten Kabel 2 werden am Ende in einem Ringwickler 20, bzw. Kabelrolle oder Spule aufgewickelt. Der Ringwickler 20 zieht mit einer konstanten einstellbaren Kraft an dem Kabel 2 hinter der Vorschubeinheit 19.

Eine Zentralsteuerung 21 regelt und steuert das Auslösen des Ultraschallverdichters 11, das Auslösen des Kerbgerätes 13, die Beschriftung durch den Tintenstrahldrucker 17 und die Kabellängen durch die Vorschubeinheit 19.
Die Zentalsteuerung 21 ist hier in einem Personal Computer eingebunden.

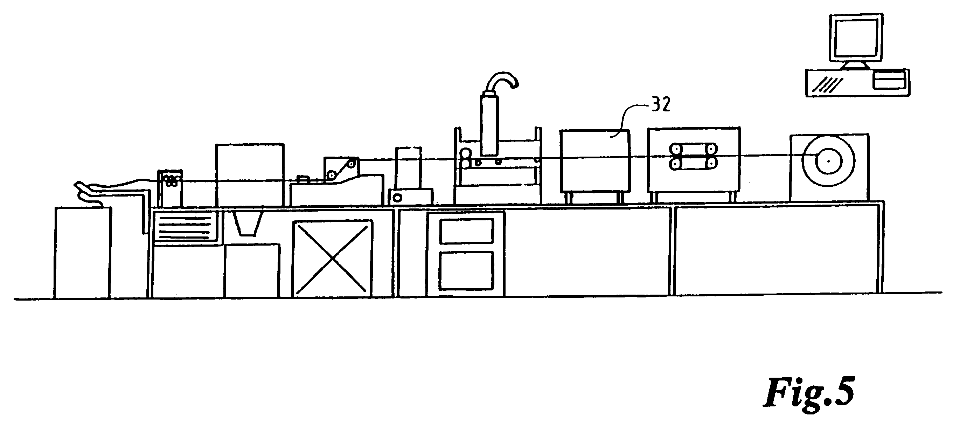

In der Fig. 5 ist die Bearbeitungsvorrichtung 1 mit einer weiteren Bearbeitungsstation 32 dargestellt. Diese formt, die Enden der Isolierung 7, nach dem Ultraschallverdichten und dem Einkerben durch Wärmeeinwirkung und anschließendes Stauchen zu einem ringförmigen Kragen 33, wie in der Fig. 2d dargestellt ist. Die Isolierung 7 wird bis sie weich oder gar zähflüssig wird erhitzt. Die Wärmezuführung kann durch Heißluft oder durch ein Heizschwert erfolgen.
Der Kragendurchmesser beträgt etwa das zwei bis dreifache des Durchmessers der Isolierung 7. Die zu stauchende Isolierlänge beträgt annähernd Isolierungsdurchmesser.

Der Kragen dient dann als Einführungsbegrenzung bei Klemmen und als Fingerschutz. Dieser verhindert auch ein Klemmen der Isolierung 7.
Zusätzliche Elemente, wie Spezialhülsen oder dergleichen, sind dann nicht erforderlich.
Die Bearbeitung kann vorteilhafterweise stattfinden, ohne daß es erforderlich ist das Kabel aufzutrennen.

Die Kabellängen der miteinanderverbundenen konfektionierten Leitungen können unterschiedlich sein, insbesondere wenn die Sequenz der konfektionierten Kabel in der Kabelrolle mit der späteren Verdrahtungsreihenfolge übereinstimmt.

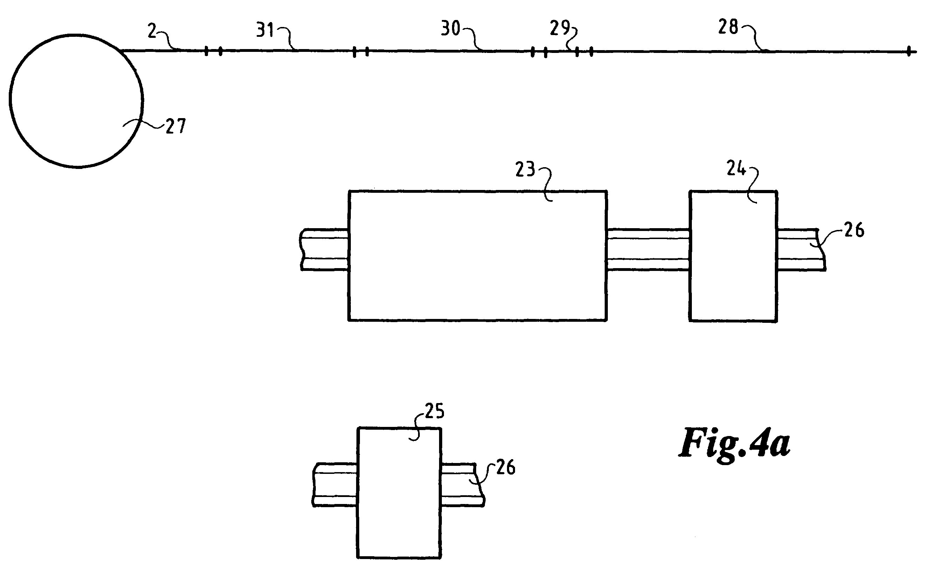

Anhand der Figuren 4a bis 4e soll dieses näher erläutert werden.

In den Figuren sind Geräte 23, 24, 25, wie z.B. Schalt- und Steuergeräte, auf Hutschienen 26 bzw. Montageschienen dargestellt, die in einem Schalt- oder Steuerschrank verdrahtet werden sollen.

Die konfektionierten Kabel 28, 29, 30, 31 sind in Montagereihenfolge miteinander verbunden und aus einer Kabelrolle 27 in der Fig. 4a herausgezogen dargestellt. Die Kabellänge ist der erforderlichen Länge angepaßt.
Der Zeichnungsmaßstab der Kabel auf der Kabelrolle 27 beträgt hier etwa die Hälfte als der Maßstab der Darstellung in Verbindung mit den Geräten 23,24,25.

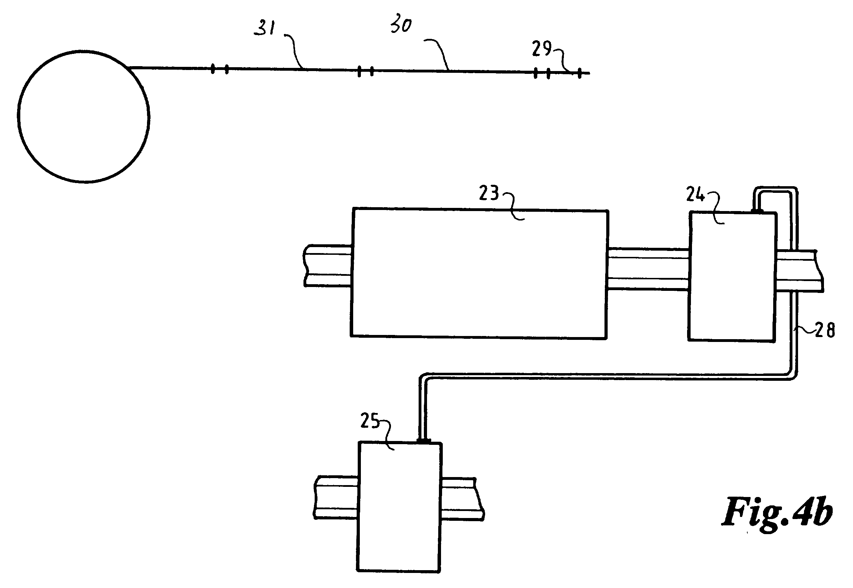

Zunächst soll das Kabel 28 in Fig. 4a die Geräte 24 und 25 mit den auf der Isolierung 7 angegebenen Klemmen, wie bereits oben erläutert worden ist, verbunden werden. Hierbei braucht das Kabel 28 nur aus der Kabelrolle entnommen, durch Abknicken an der Sollbruchstelle 16 von der Kabellrolle abgetrennt und beispielsweise, wie in der Fig. 4b gezeigt ist, angeklemmt zu werden.

Zwangsläufig steht das Kabel 29, welches nun zweckmäßig als nächstes anzuschließendes Kabel angenommen werden soll, am Anfang der Kabellrolle 27 und daher an der richtigen Stelle.

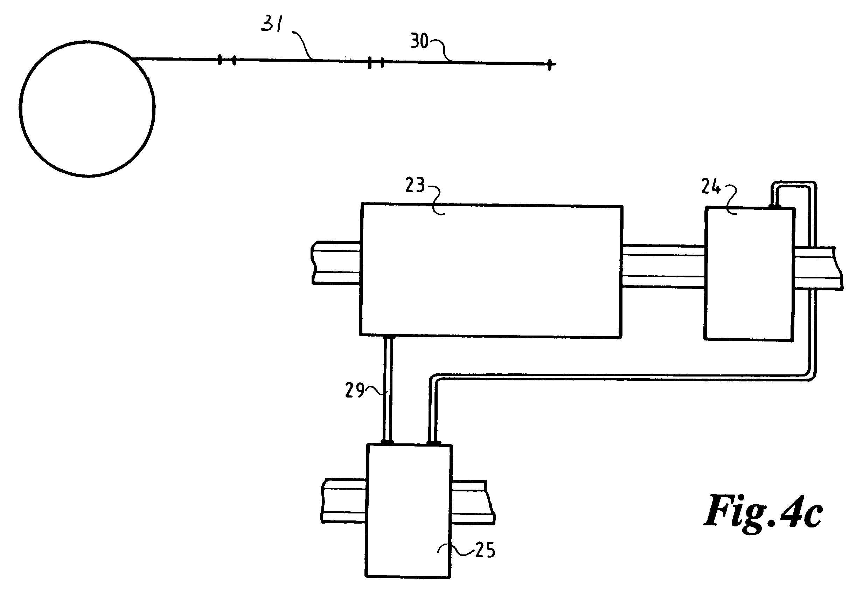

In der Fig. 4c ist das Kabel 29 zwischen den Geräten 23 und 25 angeordnet dargestellt. Es ist aus den Figuren 4a-e ersichtlich, daß die Kabellänge der konfektionierten Kabel 28 bis 31 der erforderlichen Länge angepaßt ist, so daß die Verdrahtung sauber ist und so die Fehlersuche vereinfacht wird.

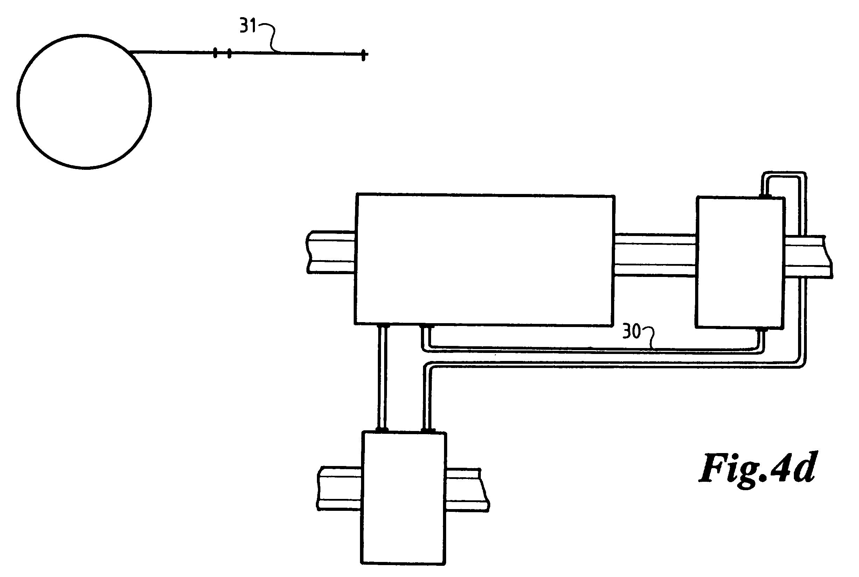

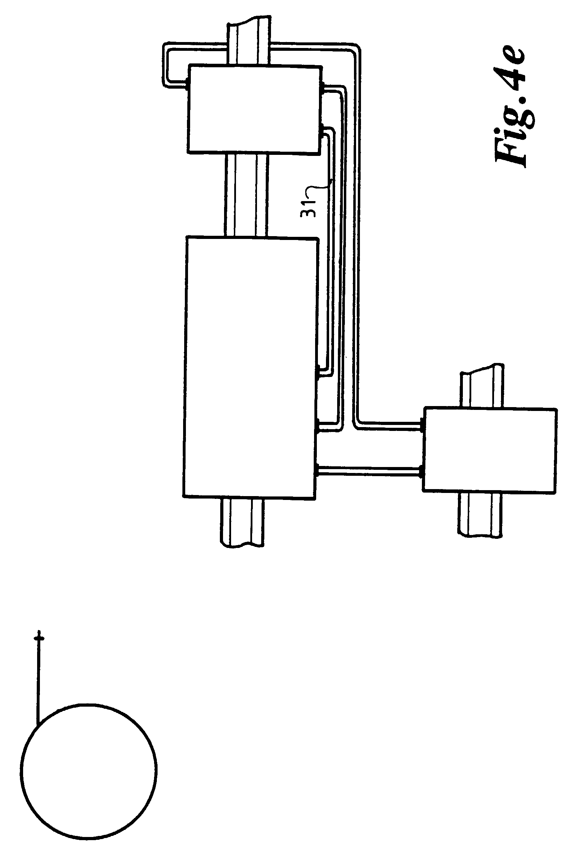

In den Figuren 4d und 4e stehen noch die Kabel 30, 31 im vordergrund, die die Geräte 23 und 24 miteinander verbinden.

Durch dieses erfinderische Montageverfahren beispielsweise von Schaltschränken bzw. durch die Sequenz der miteinander Verbundenen konfektionierten Kabel und den aufgedruckten Kennzeichnungen werden Verdrahtungsfehler reduziert und immer die gleiche Verdrahtungsreihenfolge erzwungen, wodurch beispielweise die Schaltschränke einen vom Montagepersonal unabhängigen Aufbau aufweisen, was bei Leitungsprüfungen eine spätere Fehlersuche vereinfacht. Dies führt also zu einer Standardisierung und zu einem gleich bleibenden Aussehen des Leitungsbundes.

Es tritt zusätzlich eine Materialersparnis durch eine optimale Längenanpassung des einzelnen Leiters ein. Weiterhin tritt eine Effektive Ausnutzung des vorhandenen Verdrahtungsraumes ein, da keine Leitungsüberlängen im Leitungsbund untergebracht werden müssen.

Eine Entlastung des Montagepersonals tritt auch insofern ein, als das Aussuchen und Entnehmen des zu verdrahtenden Leiters oder Kabels aus einem Vorratsbehältnis entfällt, da ja der Leiter einer Sequenz immer an der richtigen Stelle zur Verfügung steht.

Mit der Bearbeitungsvorrichtung 1 können auch konfektionierte Leitungen oder Kabel mit gleicher Länge hergestellt werden, wobei die Leitungen gleicher Länge in jeweils einer Kabelrolle angeordnet sind. In einer anderen Kabelrolle können konfektionierte Leitungen mit einer anderen Kabellänge vorhanden sein. In den verschiedenen Kabelrollen können dann abgestufte Längen vorhanden sein, so daß auch diese Leitungen zur freien Verdrahtung verwendet werden können, wobei die Leiterlänge durch den Tintenstrahldrucker 17 aufgedruckt werden kann.

Das Entnehmen der konfektionierten Kabeln aus Kabelrollen ist besonders handhabungsfreundlich. Die Kabelrollen können im vergleich zu den bekannten konfektionierten Leitungen wesentlich höher oder schwer zugänglich aufbewahrt werden, wobei die Entnahme dann tiefer bzw. leicht zugänglich angeordnet werden kann.

Die konfektionierten Kabel können ebenso in der Automobil-Leuchten- oder Nachrichtentechnik eingesetzt werden.

Wenn die Steuerung des Zwischenabisoliergerätes im Handshake-Verfahren von der Zentralsteuerung ausgeht, ergibt sich der Vorteil, daß beide Maschinen immer im richtigen aufeinander abgestimmten Takt arbeiten.
Eine einfache Auftragsabwicklung zwischen einem zentralen Herstellungswerk und einem Montagewerk entsteht, wenn die Daten, welche für eine Fertigung der Kabelsequenzen erforderlich sind, von einem magnetischen Informationsträger, wie Diskette, übernommen werden. Die Daten können direkt auf Diskette von einem Projektierungssystem gespeichert werden und durch Postversand oder dergleichen verschickt werden. Eine Datenfernübertragung ist ebenfalls möglich.

Eine schnelle Auftragsabwicklung entsteht, wenn die Daten, welche für eine Fertigung der Kabelsequenzen erforderlich sind, über eine Fernmelde-Datenleitung übertragen werden.

## Patentansprüche

1. Konfektioniertes Kabel, insbesondere für den Schaltschrank- und Steuerungsbau, das mit einer Isolierung versehen ist und seine Kabelenden, derart bearbeitet sind, daß sie für den Anschluß an Kabelklemmen geeignet sind, wobei das konfektionierte Kabel (2) in einer Sequenz miteinander verbundener, ungetrennter konfektionierter Kabel (2, 31, 30, 29, 28) eingebunden ist, wobei ferner Stellen 15) als Verbindungsstellen vorhanden sind, **dadurch gekennzeichnet,** daß der blanke Leiter bzw. Litze oder Stelle (15) an den Leitungsenden ultraschallverdichtet ist und daß die Sequenz der konfektionierten Kabel (2) an den Verbindungsstellen mit Sollbruchstellen (16) versehen ist.

2. Konfektioniertes Kabel für den Schaltschrank- und Steuerungsbau nach der Anspruch 1, dadurch gekennzeichnet, daß eine Sequenz von miteinander verbundenen konfektionierten Kabeln (2, 31, 30, 29, 28) mit der Verdrahtungsreihenfolge eines später zu verdrahtenden Gerätes oder dergleichen übereinstimmt, wobei die Kabel zwischenabisolierte Stellen aufweisen, daß jedes Kabel (2) mit einer aufgedruckten Kennzeichnung (18) jeweils am Anfang und am Ende, in der Mitte oder beides versehen ist und daß die Kennzeichnung (18) mittels eines Tintenstrahldruckers (17) aufgedruckt wird.

3. Konfektioniertes Kabel nach Anspruch 1, dadurch gekennzeichnet, daß das Kabel (2) eine kragen- oder wulstförmige Ausbildung der Isolierung (7) an den Isolierungsenden aufweist.

4. Verfahren zur Herstellung von konfektionierten Kabeln nach Anspruch 1, wobei das unbearbeitete, ungetrennte Kabel (2) einem Zwischenabisoliergerät (8) zugeführt und dort abisoliert wird, dadurch gekennzeichnet, daß die abisolierten Stellen ultraschallverdichtet werden, und daß die ultraschallverdichteten Stellen in der Mitte mit einer Sollbruchstelle (16) versehen werden, wobei das Kabel derart bearbeitet wird, daß eine Sequenz miteinander verbundener, ungetrennter konfektionierter Kabel entsteht.

5. Verfahren nach Anspruch 4, dadurch gekennzeichnet, daß die Sollbruchstelle (16) durch beidseitiges Einkerben mit einem stumpfen Messerpaar entsteht, wobei die Vertiefungen gegenüberliegend angeordnet sind und die Tiefe jeder Einkerbung mindestens 25% beträgt.

6. Bearbeitungsvorrichtung mit einer Zwischenabisoliereinheit (8), einem Kerbgerät (13) und einer Zentralsteuerung (21) zur Durchführung des Verfahrens nach Anspruch 4, dadurch gekennzeichnet, daß die Bearbeitungsvorrichtung aus einem der Zwischenabisoliereinheit (8) nachgeordneten Ultraschallverdichter (11), einem nachgeordneten Kerbgerät (13), einem Tintenstrahldrucker (17) und eine am Bearbeitungsende angeordnete Vorschubeinheit (19) zum Transport und zur Regelung der Kabellänge besteht und daß die Zwischenabisoliereinheit (8), der Ultraschallverdichter (11), das Kerbgerät (13), der Tintenstrahldrucker (17) und die Vorschubeinheit (19) von der Zentralsteuerung (21) geregelt und gesteuert werden, wobei der Tintenstrahldrucker (17) zwischen dem Kerbgerät (13) und der Vorschubeinheit (19) angeordnet ist, und daß der von dem Tintenstrahldrucker (17) zu schreibende Text oder die Kennzeichnung von der Zentralsteuerung (21) zur Verfügung gestellt wird.

7. Bearbeitungsvorrichtung nach Anspruch 6, dadurch gekennzeichnet, daß die Vorschubeinheit (19) aus zwei gegeneinander laufenden Bändern besteht, die durch einen Schrittmotor angetrieben werden, und daß hinter der Vorschubeinheit (19) ein Ringwickler (20) zum Aufwickeln auf einer Kabelrolle oder dergleichen angeordnet ist, wobei der Ringwickler (20) mit einer konstanten, einstellbaren Kraft an dem Kabel (2) zieht.

8. Bearbeitungsvorrichtung nach Anspruch 6 für ein Kabel nach Anspruch 2, dadurch gekennzeichnet, daß Daten, welche die Verdrahtungsinformationen beinhalten, wie Montagereihenfolge, Kabellänge oder Kennzeichnung, von einem Projektierungssysten, wie CAE-System, erzeugt werden.

9. Bearbeitungsvorrichtung nach Anspruch 6 für ein Kabel nach Anspruch 3, dadurch gekennzeichnet, daß nach einem Ultraschallverdichter (11) eine Bearbeitungsstation (32) zur Erzeugung eines ringförmigen Kragens (33) oder Wulst an den Endstellen der Isolierung durch Erhitzen und Stauchen angeordnet ist und daß die Bearbeitungsstation (32) die Isolierung (7) erhitzt, bis sie weich oder zähflüssig wird.

10. Verwendung eines Kabels nach einem der Ansprüche 1 bis 3 zur Montage einer Schaltanlage oder eines Schaltschrankes zur Energieverteilung oder zur Verdrahtung von Schalt-, Befehls-, Steuer- oder Anzeigegeräten, wie Leistungsschalter, Motorschutzschalter, Schütze, Nockenschalter, Befehlsgeräte, Anzeigeelemente oder speicherprogrammierbare Steuerungen.

## Claims

1. Ready-made cable, especially for the construction of switch cabinets and controls, provided with an insulation, and having cable terminations which are processed in such a way that they lend themselves for the connection to cable terminals, with the ready-made cable (2) being integrated in a sequence of ready-made cables (2, 31, 30, 29, 28), which are connected with one another and non-separated, and with points (15) being provided as joints, characterized in that the bare conductor or, respectively, strand or the point (15) is compressed by ultrasound at the line ends, and in that the sequence of the ready-made cables (2) is provided with predetermined breaking points (16) located at the joints.

2. Ready-made cable, especially for the construction of switch cabinets and controls as claimed in claim 1, characterized in that a sequence of ready-made cables (2, 31, 30, 29, 28), which are connected with one another, corresponds to the wiring sequence of a device or a similar appliance that is to be wired later, while the cables present intermediate stripped points, and in that every cable (2) is provided with an identification (18) each at the beginning and at the end, in the centre or at both locations, and in that the identification (18) is printed on it, using an ink-jet printer (17).

3. Ready-made cable as claimed in claim 1, characterized in that the cable (2) presents a collar- or bead-shaped insulation form (7) at the ends of the insulation.

4. Process for the manufacture of ready-made cables as claimed in claim 1, while the unprocessed and non-separated cable (2) is fed into an intermediate stripping device (8) and stripped in this device, characterized in that the stripped points are compressed by means of ultrasound, and in that the points compressed by means of ultrasound are provided with a predetermined breaking point (16) located at the centre, while the cable is processed in such a way that a sequence of ready-made cables, which are connected with one another and non-separated, is created.

5. Process as claimed in claim 4, characterized in that the predetermined breaking point (16) is created by notches applied from both sides by means of a pair of blunt knifes, while the notches are located opposite of one another, and while the depth of each notch amounts at least to 25 per cent.

6. Processing facility including an intermediate stripping unit (8), a notching device (13), and a central control unit (21) allowing the execution of the process as claimed in claim 4, characterized in that the processing facility consists of an ultrasonic compressor (11) following the intermediate stripping unit (8), of a following notching device (13), of an ink-jet printer (17), and of a forward feed unit (19) which is located at the end of processing in order to transport and to control the length of the cable, and in that the intermediate stripping unit (8), the ultrasonic compressor (11), the notching device (13), the ink-jet printer (17), and the forward feed unit (19) are controlled by the central control unit (21), while the ink-jet printer (17) is arranged between the notching device (13) and the forward feed unit (19), and in that the text to be written by the ink-jet printer (17) or the identification is supplied by the central control unit (21).

7. Processing facility as claimed in claim 6, characterized in that the forward feed unit (19) consists of two belts which run against one another, and which are driven by means of a stepping motor, and in that a circular take-up unit (20) or a similar device is arranged behind the forward feed unit (19) in order to wind up the cable onto a cable reel or onto a similar appliance, while the circular take-up unit (20) pulls the cable (2), applying a constant force which can be adjusted.

8. Processing facility as claimed in claim 6 for a cable as claimed in claim 2, characterized in that data, which include such wiring information as assembly sequence, cable length or identification, are generated by a design system such as a CAE system.

9. Processing facility as claimed in claim 6 for a cable as claimed in claim 3, characterized in that a processing station (32) for the creation of a ring-shaped collar (33) or bead by heating or upsetting at the end points of the insulation is located after an ultrasonic compressor (11), and in that the processing station (32) heats the insulation (7) until it becomes soft or viscous.

10. Use of a cable as claimed in any claim 1 through 3 for the assembly of switch- gear or of a switch cabinet for energy distribution or for the wiring of switching, command, control, or display devices such as power switches, motor protection switches, contactors, cam-operated switches, command devices, display elements or stored-programme controls.

## Revendications

1. Câble surmoulé, pour armoire électrique et élément de commande en particulier, pourvu d'une isolation et dont les extrémités sont exécutées de telle sorte qu'elles sont adaptées à la connexion sur des bornes de câble, le câble surmoulé (2) étant alors intégré dans une séquence de câbles surmoulés (2, 31, 30, 29, 28) non séparés et raccordés entre eux, des sections (15) faisant en outre fonction de raccordements, caractérisé en ce que le conducteur dénudé ou cordon ou section (15) est comprimé par ultrasons aux extrémités de ligne et en ce que la séquence de câbles surmoulés (2) est munie à ses raccordements de points destinés à la rupture (16).

2. Câble surmoulé pour armoire électrique et élément de commande selon revendication 1, caractérisé en ce qu' une séquence de câbles surmoulés (2, 31, 30, 29, 28) raccordés entre eux correspond à la succession des fils d'un appareil à câbler ultérieurement ou similaire, les câbles présentant donc des sections intermédiaires isolées, en ce que chaque câble (2) respectif est muni d'un marquage (18) à ses extrémités, à son milieu ou bien aux deux, et en ce que l'impression du marquage (18) a été réalisée au moyen d'une imprimante à jet d'encre (17).

3. Câble surmoulé selon revendication 1, caractérisé en ce que le câble (2) présente une formation à collet ou bien torique de la partie isolante (7) sur les extrémités d'isolation.

4. Procédé pour la fabrication de câbles surmoulés selon revendication 1, où le câble brut et non séparé (2) est conduit à un appareil d'isolation intermédiaire (8) où il sera isolé, caractérisé en ce que les sections isolées sont comprimées par ultrasons et en ce que les sections comprimées par ultrasons sont pourvues à leur milieu d'un point destiné à la rupture (16), le câble étant exécuté de sorte à présenter une séquence de câbles surmoulés non séparés et raccordés entre eux.

5. Procédé selon revendication 4, caractérisé en ce que le point destiné à la rupture (16) est réalisé par entaille aux deux extrémités avec une paire de couteaux émoussés, les évidements étant alors placés l'un en face de l'autre et la profondeur de chaque entaille représentant 25% au minimum.

6. Dispositif de finition à une unité d'isolation intermédiaire (8), un appareil à entailler (13) et une commande centrale (21) pour l'exécution du procédé selon revendication 4, caractérisé en ce que le dispositif de finition consiste en un compresseur à ultrasons (11) placé à la suite de l'unité d'isolation intermédiaire (8), en un appareil à entailler (13) placé à la suite de celui-ci, en une imprimante à jet d'encre (17) et en une unité d'avancement (19) disposée en fin de chaîne pour le transport et le réglage de longueur de câble, et en ce que l'unité d'isolation intermédiaire (8), le compresseur à ultrasons (11), l'appareil à entailler (13), l'imprimante à jet d'encre (17) et l'unité d'avancement (19) sont réglés et manoeuvrés par la commande centrale (21), l'imprimante à jet d'encre (17) étant disposée entre l'appareil à entailler (13) et l'unité d'avancement (19) ∼ et en ce que le texte à imprimer par l'imprimante à jet d'encre (17), ou le marquage, est rendu disponible par la commande centrale (21).

7. Dispositif de finition selon revendication 6, caractérisé en ce que l'unité d'avancement (19) consiste en deux bandes se mouvant dans des directions opposées, entraînées par un moteur pas à pas et en ce qu'est placé derrière l'unité d'avancement (19) un enrouleur à anneau (20) pour le bobinage sur un rouleau de câble, ou similaire, ledit enrouleur anneau (20) tirant le câble (2) avec une force constante et ajustable.

8. Dispositif de finition selon revendication 6 pour un câble selon revendication 2, caractérisé en ce que des données contenant les informations de câblage, telles que succession de montage, longueur de câble ou marquage, sont engendrées par un système de programmation, tel un système de conception assistée par ordinateur.

9. Dispositif de finition selon revendication 6 pour un câble selon revendication 3, caractérisé en ce qu'est disposée après un compresseur à ultrasons (11), une station de finition (32) pour la production d'un collet en forme d'anneau (33) ou d'un anneau torique sur les extrémités d'isolation par échauffement et écrasement, et en ce que la station de finition (32) échauffe l'isolation (7) jusqu'à ce qu'elle devienne molle ou visqueuse.

10. Application d'un câble selon l'une des revendications 1 à 3, au montage d'une installation de distribution ou d'une armoire électrique pour la distribution d'électricité ou pour le câblage d'appareils de coupure, de commande, de manoeuvre ou d'affichage, tels que disjoncteurs, disjoncteurs-protecteurs, contacteurs-disjoncteurs, contrôleurs à cames, auxiliaires de commande, éléments d'affichage ou commandes par programmes enregistrés.
